# EUROPÄISCHE PATENTSCHRIFT

(11) **EP 2 873 323 B1**
(45) Veröffentlichungstag und Bekanntmachung des Hinweises auf die Patenterteilung: **16.11.2016**
(21) Anmeldenummer: 14188304.1
(22) Anmeldetag: 09.10.2014
(51) Int. Cl.: A22C 11/00, A23B 4/01, A23L 3/01

(54) **Vorrichtung zum Behandeln eines Wurststrangs**
Device for treating a string of sausages
Dispositif de traitement d'un chapelet de saucisses

(30) Priorität: 05.11.2013 DE 102013112141
(43) Veröffentlichungstag der Anmeldung: 20.05.2015
(73) Patentinhaber: HOWE Wurstwaren KG, 90451 Nürnberg (DE)
(72) Erfinder: Singer, Manfred, 92334 Berching (DE); Koller, Dieter, 92360 Sulzbürg (DE)
(74) Vertreter: Lindner Blaumeier Patent- und Rechtsanwälte

(56) Entgegenhaltungen:
- EP-A1- 2 452 564
- EP-A1- 2 520 172
- DE-A1- 2 449 318
- DE-U1- 20 104 740

## Beschreibung

Die Erfindung betrifft eine Vorrichtung zum Behandeln eines Wurststrangs bestehend aus mehreren hintereinander angeordneten Würsten mit einer Wursthülle aus einem organischen Material, die jeweils im Bereich zwischen zwei Würsten eine Abdrehung aufweist, wobei wenigstens ein Mikrowellenapplikator mit wenigstens einer Applikationskammer vorgesehen ist, dem wenigstens eine Mikrowellenerzeugungseinrichtung zum Erzeugen von der Applikationskammer zuzuführender Mikrowellenstrahlung zugeordnet ist, sowie wenigstens einer Fördereinrichtung zum Fördern des Wurststrangs durch die wenigstens ein Applikationskammer.

Zur Herstellung von Würsten wird üblicherweise mittels einer Füllmaschine das Wurstbrät durch ein Füllrohr in eine schlauchförmige Wursthülle gepresst. Mittels eines Abdrehmechanismus werden die einzelnen Wurstportionen, also die einzelnen Würste, gebildet, indem der Wurststrang gedreht wird, so dass sich der Strang lokal unter Bildung einer Abdrehung der Wursthülle einschnürt. Die einzelnen Würste sind also über eine solche hüllenseitige Abdrehung voneinander getrennt. Der auf diese Weise gebildete Wurststrang wird sodann mittels einer Vereinzelungsvorrichtung getrennt. Hierzu wird der Wurststrang von einer Fördereinrichtung, üblicherweise zwei Förderbändern, gegriffen, die den Wurststrang mit definierter Geschwindigkeit zu einer Vereinzelungsvorrichtung, beispielsweise einer Schneideinrichtung, transportiert, wo die einzelnen Würste im Bereich der Abdrehung getrennt werden. Bei einer Schneideinrichtung kommen üblicherweise zwei gegenläufig rotierende Messer, die im Schnitt zusammenwirken, zum Einsatz.

Bei vielen Wurstsorten wird als Wursthülle ein Naturdarm verwendet, also ein organisches Darmmaterial. Da es sich um ein natürliches Material handelt, weist es zwangsläufig keine homogene Dicke auf, vielmehr variiert die Materialdicke über die Darmlänge. Im Bereich der Abdrehungen, wo der Darm also zusammengedreht ist, ergibt sich zum einen ein relativ dicker Materialabschnitt, zum anderen kann dessen Dicke aufgrund unterschiedlicher Darmstärken von Abdrehung zu Abdrehung variieren. Auch ist das Darmmaterial sehr weich und elastisch. Diese Umstände bedingen, dass hohe Anforderungen an die Schneideinrichtung gestellt werden, das heißt, dass die Messer bzw. das Messer und ein etwaiger Gegenhalter extrem exakt und mit hoher Schneidkraft schneiden müssen, um die vollständige Durchtrennung sicherzustellen. Auch muss die Schneideinrichtung in der Lage sein, ohne weiteres unterschiedliche Abdrehungsdicken sicher trennen zu können. Alternativ kann auch Hüllmaterial aus Kunststoff verwendet werden, das im Bereich der Abdrehungen ebenfalls zu schneiden ist, um die Würste zu trennen, wobei auch hier wegen der Elastizität des Kunststoffmaterials hohe Anforderungen an die Schneideinrichtung gestellt sind.

Neben der Verwendung einer mechanischen Schneideinrichtung ist es ferner bekannt, eine Vereinzelung der Würste durch Applikation von Mikrowellenstrahlung zu realisieren. Zu diesem Zweck sind Vorrichtungen bekannt, die wenigstens einen Mikrowellenapplikator mit wenigstens einer Applikationskammer aufweisen. Die Mikrowellenstrahlung wird mittels einer Mikrowellenerzeugungseinrichtung, also einem geeigneten Magnetron, erzeugt und der Applikationskammer zugeführt. Mittels einer geeigneten Fördereinrichtung wird der Wurststrang zur Applikationskammer und durch diese hindurch gefördert. In der Applikationskammer wird die energiereiche Mikrowellenstrahlung appliziert. Durch diese Mikrowellenstrahlung erfolgt eine thermische Behandlung des Wurststrangs, ihm wird Mikrowellenenergie zugeführt, die zu einer Erwärmung des Materials führt. Diese Mikrowellenstrahlung kann nur im Bereich der Abdrehungen durch entsprechende Ansteuerung der Mikrowellenerzeugungseinrichtung appliziert werden, das heißt, dass die Strahlung getaktet erzeugt wird, wozu über eine geeignete Erfassungseinrichtung (Sensorik) erfasst wird, wann eine Abdrehung im Applikationsbereich, also in der Applikationskammer ist. Bevorzugt wird die Mikrowellenstrahlung aber kontinuierlich zugeführt, das heißt, dass der gesamte Wurststrang, also Würste und Abdrehungen, mittels der Mikrowellenstrahlung beaufschlagt werden. Während der Strahlungsapplikation kommt es zu einem Energieeintrag, der zu einer Materialerwärmung führt. Da es sich bei dem Hüllmaterial entweder um ein natürliches, organisches Material, nämlich tierischen Darm handelt, oder einen Kunstdarm, also ein ebenfalls organisches Kunststoffmaterial, kommt es infolge des Energieeintrags und der daraus resultierenden Erwärmung zu einer Veränderung des Materials bzw. der Materialstruktur. Im Falle des Naturdarms setzt ein Koagulationsprozess ein, das heißt, dass Eiweiße bzw. Proteine ihre Struktur verändern und koagulieren. Dieser Prozess beginnt bei einer Temperatur von üblicherweise mehr als 40°C. Je mehr Energie eingetragen wird, umso höher ist die Erwärmung, und umso stärker der Koagulationsprozess. Diese Koagulation führ wiederum zu einer Versprödung bzw. Verhärtung des Materials, das heißt, dass sich das organische Hüllenmaterial versteift und seine Flexibilität variiert. Im Falle eines Kunstdarmes führt der Energieeintrag und die Erwärmung zu einem Aufbruch der Bindungen und zu Vernetzungsvorgängen, woraus ebenfalls eine Versprödung realisiert. Je höher und je schneller der Energieeintrag ist, umso höher ist der Koagulations- oder Vernetzungsgrad und umso größer der Grad der querschnittsmäßig gesehen einsetzenden Versprödung. Diese Versprödung geht soweit, das heißt, dass derart viel Energie eingebracht wird, dass es zum Bruch und damit zur automatischen Wurstvereinzelung kommt. Somit ist durch die Applikation der Mikrowellenstrahlung eine berührungslose Vereinzelung der Würste möglich. Die Leistung der Mikrowellenerzeugungseinrichtung sollte dabei 1 - 50 kW, vorzugsweise 3 - 30 kW betragen und entsprechend einstellbar sein, um sicherzustellen, dass stets ein hinreichend hoher Energieeintrag möglich ist.

EP2452564 offenbart eine Vorrichtung zum Behandeln eines Wurststranges durch einen Mikrowellenapplikator. EP2520172 lehrt eine Vorrichtung zur Herstellung von Trockenwürsten unter Verwendung von Mikrowellenstrahlung. DE20104740 betrifft einen Mikrowellenofen zur Erwärmung von Prozessgut. DE2449318 offenbart eine Mikrowellenanlage mit Temperaturfühler.

Wie beschrieben wird zur Wurststrangherstellung das Wurstbrät in den Darm eingefüllt. Der hergestellte, abgedrehte Wurststrang wandert sodann durch die Applikationskammer. Während des Füllprozesses kann es vorkommen, insbesondere wenn beim Füllen von Naturdarm ein neues Darmstück angesetzt wird, dass etwas Wurstbrät austritt, also nicht von der Darmhülle umschlossen ist. Dieses quasi freiliegende Wurstbrät wandert nun ebenfalls in den Mikrowellenapplikator und insbesondere in die Applikationskammer, wo es mitunter hängen bleibt, so dass die Applikationskammer verschmutzt. Dies ist nicht wünschenswert, nachdem im Rahmen der Lebensmittelherstellung, insbesondere im hier vorliegenden Bereich der Fleischverarbeitung ein extrem hohes Maß an Sauberkeit gefordert wird.

Der Erfindung liegt damit das Problem zugrunde, eine Vorrichtung zum Behandeln eines Wurststrangs mit einem Mikrowellenapplikator, in dem dem Wurststrang Mikrowellenstrahlung appliziert wird, anzugeben, die gegenüber bekannten Vorrichtungen verbessert ist und es ermöglicht, eine in der Applikationskammer gegebene Ansammlung an organischem Material zu erfassen.

Zur Lösung dieses Problems ist bei einer Vorrichtung der eingangs genannten Art erfindungsgemäß wenigstens eine Messeinrichtung zum Erfassen wenigstens eines Messwertes, der ein Maß für die in der Applikationskammer herrschenden Temperatur darstellt, vorgesehen.

Die erfindungsgemäße Vorrichtung zeichnet sich dadurch aus, dass mittels einer Messeinrichtung ein Messwert aufgenommen wird, der ein direktes oder ein indirektes Maß für die in der Applikationskammer herrschende Temperatur ist. Dem liegt die Erkenntnis zugrunde, dass Wurstbrät, also organisches Material, das sich in der Applikationskammer, diese verschmutzend, ansammelt, der der Applikationskammer zuzuführenden Mikrowellenstrahlung dauerhaft ausgesetzt ist. Es kommt folglich - anders als bei dem schnell durchlaufenden Wurststrang - zu einer längerzeitigen Bestrahlung und damit Erwärmung dieses organischen Materials. Da es remanent in der Applikationskammer ist, erwärmt sich folglich auch die Kammeratmosphäre. Diese Erwärmung kann im Extremfall sogar so weit gehen, dass das organische Material sehr heiß wird und sich vollständig zersetzt und sogar anbrennt, mithin also sehr heiß wird.

Durch Verwendung der erfindungsgemäß integrierten Messeinrichtung ist es nun möglich, kontinuierlich eine Temperaturüberwachung vorzunehmen. Im Rahmen dieser werden kontinuierlich Messwerte aufgenommen, die ein entsprechendes Maß für die Kammertemperatur darstellen. Ergibt sich durch entsprechende Verarbeitung dieser Messwerte, dass diese eine Temperaturerhöhung über eine definierte Solltemperatur anzeigen, so ist sichergestellt, dass dies auf eine Verschmutzung im Inneren der Applikationskammer durch daran anhaftendes organisches Material zurückzuführen ist. Denn der Wurststrang selbst, der kontinuierlich mit hoher Geschwindigkeit durch die Applikationskammer wandert, kann allein nicht für einen entsprechenden Temperaturanstieg sorgen. Wird eine solche Situation mit einer erfassten Temperatur, die höher als eine Vergleichstemperatur ist, ermittelt, so wird über eine geeignete Steuerungseinrichtung, die beispielsweise diese Messwertauswertung vornimmt, der Betrieb entsprechend gesteuert, indem beispielsweise die Mikrowellenerzeugung abrupt beendet wird, wie auch die weitere Förderung des Wurststrangs gestoppt wird. Ein entsprechender Förderstopp schlägt natürlich auf vor- und gegebenenfalls nachgeschaltete Peripheriegeräte durch, auch diese werden entsprechend gesteuert.

Aufgrund des entsprechenden Steuerungseingriffs, insbesondere im Falle eines Arbeitsstopps kann nun der Mikrowellenapplikator entsprechend geöffnet und im Kammerbereich gereinigt werden, das heißt, dass das anhaftende organische Material aus der Applikationskammer entfernt wird.

Die erfindungsgemäße Integration der Messeinrichtung und damit die kontinuierliche Temperaturüberwachung lässt damit mit besonderem Vorteil eine Überwachung der im Betrieb natürlich geschlossenen, nicht einsehbaren Applikationskammer hinsichtlich einer etwaigen Verschmutzung zu. Es kann folglich zu einem sehr frühen Zeitpunkt eine solche Verschmutzung erkannt werden, nachdem ein etwaiger Temperaturanstieg durch die kontinuierliche Erwärmung des verschmutzenden organischen Materials sehr frühzeitig und sensibel festgestellt werden kann. Insbesondere kann hierüber vermieden werden, dass es zu einer extremen Erwärmung dieses verschmutzenden organischen Materials bis hin zu einem Anbrennen desselben kommt. Das heißt, dass durch Integration der wenigstens einen Messeinrichtung gleichzeitig auch eine Brandschutzmaßnahme gegeben bzw. eine Brandüberwachung möglich ist.

Die Messeinrichtung selbst kann den Messwert als Temperaturmesswert direkt im Inneren der Applikationskammer erfassen. Gemäß dieser Erfindungsalternative wird eine Messeinrichtung verwendet, die eine direkte Temperaturmessung im Kammerinneren ermöglicht. Hierzu wird ein Sensorelement im Kammerinneren angeordnet, das mit einer entsprechenden Messschaltung außerhalb der Kammer verbunden ist. Das Sensorelement ist bevorzugt an einer Stelle zu positionieren, an der es möglichst wenig mit Mikrowellenstrahlung beaufschlagt wird, gleichwohl aber mit dem Kammerinneren kommuniziert, um die Temperatur zu erfassen. Auch eine optische, also berührungslos arbeitende Messeinrichtung, insbesondere eine Infrarotmesseinrichtung, die z. B. die Oberflächentemperatur einer Wand der Applikationskammer erfasst und auswertet, ist verwendbar. Diese Messeinrichtung kann mit einer Messoptik so angeordnet werden, dass sie eine Kammerwand großflächig erfasst, wenngleich die sensiblen Messelektronikteile außerhalb des Strahlungsbereichs angeordnet sind.

Bevorzugt jedoch ist es, wenn die Messeinrichtung den Messwert als Temperaturmesswert eines die Applikationskammer auskleidenden oder begrenzenden Bauteils erfasst wird. Das heißt, dass hier quasi eine indirekte Temperaturmessung der Kammertemperatur dadurch erfolgt, dass die Temperatur eines in der Applikationskammer befindlichen Bauteils erfasst wird. Um zu vermeiden, dass die Messeinrichtung oder ein entsprechender Sensor im Kammerinneren anzuordnen ist, wird gemäß einer besonders bevorzugten Ausgestaltung der Temperaturmesswert an der Außenseite des Bauteils erfasst, also an der Seite, die nicht zum Kammerinneren gerichtet ist. Ein solches Bauteil ist bevorzugt, jedoch nicht beschränkend, eine Schiene, die in der Applikationskammer aufgenommen ist und die diese auskleidet oder durchsetzt und benachbart zum daran vorbeilaufenden Wurststrang angeordnet ist. Eine solche, aus einem geeigneten und für Mikrowellenstrahlung transparenten Material bestehende Schiene ist, da die Kammer auskleidend oder begrenzend, im Falle einer Brätanhaftung in der Kammer zwangsläufig der sich erhöhenden Temperatur ausgesetzt. Da das Schienenmaterial relativ dünn ist, kann folglich eine entsprechende Temperaturerhöhung ohne weiteres auch an der Schienenaußenseite erfasst werden, wobei natürlich seitens der Steuerungseinrichtung, die die Messwerte verarbeitet, in Verbindung mit den spezifischen Materialparametern des Schienenmaterials (Wärmeleitfähigkeit etc.) von der gemessenen Außentemperatur auf die gegebene Innentemperatur geschlossen wird. Bezüglich der konkreten Ausgestaltung dieser indirekten Temperaturmessung durch Erfassung der Außentemperatur eines solchen schienenartigen Bauteils wird nachfolgend noch näheres ausgeführt.

Zweckmäßig ist es einerseits aus Redundanzgründen, andererseits natürlich auch, weil Wurstbrät an unterschiedlichen Seiten der Applikationskammer anhaften kann, zwei an unterschiedlichen Positionen angeordnete Messeinrichtungen vorzusehen, die jeweils einen Temperaturmesswert des oder jeweils eines Bauteils, also beispielsweise einer solchen Schiene, erfassen. Bevorzugt wird als Fördereinrichtung ein Bandförderer mit zwei übereinander liegenden Förderbändern verwendet, welche Förderbänder vorzugsweise durch die Applikationskammer laufen. Sie liegen übereinander, das heißt, dass in Bezug auf die Vertikale keine Anhaftungen möglich sind. Die beiden Bauteile sind horizontal beabstandet zueinander angeordnet, sie befinden sich also quasi seitlich des Wurststrangs. In diesem Bereich kann Wurstbrät anhaften, weshalb die entsprechenden Messeinrichtungen dementsprechend positioniert sind respektive die entsprechenden Temperaturmesswerte an den beiden verschiedenen Positionen aufnehmen.

Im Falle einer indirekten Temperaturmessung an einem Bauteil, insbesondere dessen Außenseite, wird als Messeinrichtung bevorzugt eine berührungslos arbeitende optische Messeinrichtung, insbesondere eine Infrarotmesseinrichtung verwendet. Diese Messeinrichtung umfasst eine entsprechende Messoptik, die es ermöglicht, den eigentlichen Sensor respektive die entsprechende Messschaltung außerhalb und hinreichend weit beabstandet zur Applikationskammer, wo eine hohe Strahlungsdichte gegeben ist, anzuordnen. Die optische Messeinrichtung, insbesondere in Form einer Infrarotmesseinrichtung, erfasst die Oberflächentemperatur des Bauteils, bevorzugt wie beschrieben an der Bauteilaußenseite, um den Temperaturmesswert aufzunehmen. Alternativ zur Verwendung einer berührungslos arbeitenden optischen Messeinrichtung ist es denkbar, dass die Messeinrichtung eine berührend am Bauteil anliegende Messeinrichtung, insbesondere umfassend am Bauteil anliegende Glasfasern ist. Gemäß dieser Erfindungsausgestaltung kommt eine faseroptische Temperaturmessung zum Einsatz, bei der beispielsweise ein mit PTFE ummantelndes Glasfaserbündel an das Bauteil geführt ist. Über das Glasfaserbündel ist wiederum eine optische Kopplung zum Bauteil gegeben, die eine Temperaturerfassung ermöglicht. Bevorzugt jedoch wird eine berührungslos arbeitende optische Messeinrichtung, insbesondere in Form einer Infrarotmesseinrichtung, verwendet, da durch eine geeignete Messoptik der optisch erfasste Bereich entsprechend aufgezoomt werden kann, so dass eine großflächige Temperaturüberwachung möglich ist.

Wie bereits beschrieben ist gemäß einer besonders vorteilhaften Weiterbildung das oder jedes Bauteil eine aus einem für Mikrowellenstrahlung transparenten Material bestehende und lösbar im Mikrowellenapplikator angeordnete Schiene, die benachbart zum Wurststrang in der Applikationskammer angeordnet ist. Bevorzugt werden wie ausgeführt zwei solcher Schienen verwendet, wobei entweder nur einer Schiene eine Messeinrichtung zugeordnet ist, bevorzugt jedoch beiden Schienen. Diese Schienen sind, nachdem vorzugsweise die Fördereinrichtung mit ihren beiden Förderbändern durch die Applikationskammer läuft, horizontal seitlich neben dem Wurststrang positioniert, wobei in weiterer horizontaler Verlängerung die entsprechenden Messeinrichtungen angeordnet sind.

Besonders bevorzugt kommen zwei Schienen zum Einsatz, die einen C-förmigen Querschnitt aufweisen und einander zugewandt in dem Mikrowellenapplikator angeordnet sind, derart, dass sie zumindest in der Applikationskammer einen rohrförmigen, im Querschnitt bevorzugt rechteckigen Hohlraum bilden, durch den der Wurststrang läuft. Diese beiden C-förmigen Schienen, die vorzugsweise einen rechteckigen C-Querschnitt besitzen, stoßen also mit ihren beiden Seitenschenkeln aneinander an, so dass sich ein rohrförmiger Hohlraum ergibt. Durch diesen laufen vorzugsweise nun die beiden Förderbänder der durchlaufenden Fördereinrichtung, das eine Förderband benachbart zu den beiden aneinander anstoßenden unteren Schienenschenkeln, das obere benachbart zu den beiden oberen aneinanderstoßenden Schienenschenkeln. Eine Wurstbrätanhaftung unter- und oberhalb der Förderbänder ist damit ausgeschlossen. Die Messeinrichtung(en) erfasst nun die Temperatur, vorzugsweise die Außentemperatur des oder der mittigen C-Schenkel der Schienen, die seitlich zum Wurststrang angeordnet sind. Mit diesem seitlich geschlossenen Hohlraum kann vorteilhaft das Volumen, in dem sich verschmutzendes Wurstbrät ansammeln kann, verkleinert werden.

Die beiden Schienen sind wie ausgeführt lösbar im Mikrowellenapplikator angeordnet (das gleiche gilt natürlich auch im Falle der Verwendung nur einer einzelnen Schiene), so dass sie wie im Falle einer festgestellten Verschmutzung ohne weiteres entnommen und gereinigt werden können. Da sie bevorzugt einen geschlossenen rohrförmigen Hohlraum in der Applikationskammer bilden, ist folglich allein mit der Reinigung dieser beiden Schienen die Kammerreinigung abgeschlossen, da etwaiges Wurstbrät, da der Wurststrang durch den Hohlraum läuft, auch nur schienenseitig anhaften kann.

Bevorzugt weist die oder wenigstens eine der beiden, vorzugsweise beide Schienen zumindest abschnittsweise in dem Bereich, der in der Applikationskammer angeordnet ist, eine geringere Wandstärke als in den anderen Bereichen auf. Dies dient der Erhöhung der Mikrowellentransparenz des ohnehin weitestgehend transparenten Schienenmaterials.

Die eine respektive beide Schienen können dabei so ausgelegt sein, dass sie letztlich nur im Bereich der Applikationskammer angeordnet sind, sich sonst aber nicht weiter durch den Mikrowellenapplikator strecken. Bevorzugt jedoch erstrecken sich die Schienen zumindest abschnittsweise längs durch den Mikrowellenapplikator, je nachdem wie lang respektive mit wie vielen unterschiedlichen Applikationskammern dieser ausgeführt ist, worauf nachfolgend noch eingegangen wird.

Der Mikrowellenapplikator selbst besteht bevorzugt aus zwei zum Öffnen auseinander bewegbaren Teilen, wobei der eine Teil positionsfest ist und mit einem zur Mikrowellenerzeugungseinrichtung führenden Hohlleiter verbunden ist, während der andere Teil beweglich gelagert ist, und wobei die Messeinrichtung, die die Temperatur an der Außenseite der entweder zu dem beweglichen Teil gerichteten Schiene oder an dieser angeordneten Schiene misst, am bewegbaren Teil angeordnet ist und mit einer Messoptik auf die Schiene gerichtet ist, oder im Falle einer verwendeten berührenden Messeinrichtung mit seinem entsprechenden Messteil zur Schiene geführt ist. Der Mikrowellenapplikator muss natürlich entsprechend geöffnet werden können, um in die Applikationskammer zu gelangen und diese respektive die darin verbauten Bauteile, also die Schienen, zu entnehmen und reinigen. Hierzu kann ein Teil des Mikrowellenapplikators, das üblicherweise als schwenkbar oder linear beweglich gelagerte Frontplatte ausgeführt ist, entsprechend vom positionsfesten anderen Applikatorteil entfernt werden, so dass der Applikator geöffnet wird. Die eine oder die beiden Schienen können nun ohne weiteres entnommen werden. Kommen wie beschrieben die beiden C-förmigen Schienen zum Einsatz, so ist zumindest eine Messeinrichtung an dem beweglichen Teil angeordnet und mit ihrer Messoptik zur Schiene hin gerichtet. Diese Schiene selbst kann zusammen mit der zweiten Schiene am positionsfesten Applikatorteil angeordnet sein, sie kann sich aber auch beim Auseinanderbewegen der beiden Teile mit dem beweglichen Teil mitbewegen.

Alternativ oder zusätzlich kann eine (zweite) Messeinrichtung vorgesehen sein, die außerhalb des Hohlleiters angeordnet und entweder mit einer Messoptik durch den Hohlleiter auf die Schiene gerichtet oder durch den Hohlleiter mit einem entsprechenden Messteil zur Schiene geführt. Da die zweite C-Schiene am positionsfesten Teil angeordnet ist und die Kammer zum Hohlleiter hin begrenzt, ist folglich die (zweite) Messeinrichtung quasi in horizontaler Verlängerung außerhalb des Hohlleiters angeordnet und dementsprechend mit ihrer Messoptik zur Schiene hin ausgerichtet respektive mit dem Glasfaserbündel zur Schiene geführt.

Die Schienen können aus unterschiedlichen Materialien bestehen, wobei natürlich ein Material zu verwenden ist, das einerseits hinreichend transparent für die Mikrowellenstrahlung ist, und das andererseits temperaturbeständig ist, da sichergestellt werden muss, dass selbst im Falle eines An- oder Verbrennens des anhaftenden organischen Materials und damit den beachtlich hohen Temperaturen keine Beschädigung des Schienenmaterials einhergeht. Zu diesem Zweck können die Schienen aus Polytetraflourethylen (PTFE), Glimmer, Quarzglas, Aluminiumoxid, Zirkoniumoxid, oder Keramik auf Basis von Aluminiumoxid oder Zirkoniumoxid bestehen. Insbesondere die Verwendung von Polytetraflourethylen ist besonders vorteilhaft, als es sich hierbei um ein Kunststoffmaterial handelt, das nur eine geringe Bruchneigung besitzt. Darüber hinaus ist es auch nicht brennbar und hinreichend temperaturfest, es hält Temperaturen von beispielsweise 250°C ohne weiteres stand. Auch die anderen genannten Materialien zeigen entsprechende Eigenschaften, sie sind einerseits nicht brennbar, andererseits aber auch extrem temperaturfest, Glimmer beispielsweise bis wenigstens 500°C, während die anderen Materialien, also das Glas, die Metalloxide respektive Keramiken bis Temperaturen von weit über 1000°C beständig sind.

Die erfindungsgemäße Vorrichtung kann in einer einfachen Ausgestaltung einen Mikrowellenapplikator mit nur einer Applikationskammer mit einer entsprechenden zugeordneten Mikrowellenerzeugungseinrichtung aufweisen. Alternativ können im Mikrowellenapplikator auch mehrere hintereinander angeordnete Applikationskammern vorgesehen sein, denen Mikrowellenstrahlung von einer gemeinsamen Mikrowellenerzeugungseinrichtung oder von jeweils separaten Mikrowellenerzeugungseinrichtungen zugeführt wird, wobei zumindest einem Teil, vorzugsweise jeder Applikationskammer wenigstens eine Messeinrichtung zugeordnet ist. Der Mikrowellenapplikator kann also beispielsweise zwei, drei oder vier hintereinander angeordnete Applikationskammern aufweisen, die beispielsweise jeweils von einer separaten Mikrowellenerzeugungseinrichtung gespeist werden. Bevorzugt ist jeder Applikationskammer wenigstens eine Messeinrichtung zugeordnet, vorzugsweise natürlich zwei Messeinrichtungen, insbesondere wenn jede Applikationskammer mit den beiden genannten C-förmigen Schienen ausgekleidet ist. Denn grundsätzlich ist es denkbar, dass anhaftendes Wurstbrät auch erst in einer hinteren Applikationskammer vom Wurststrang abfällt und dort anhaftet.

Kommen mehrere Applikationskammern zum Einsatz, so ist es besonders zweckmäßig, wenn die oder beide Schienen durch mehrere Applikationskammern laufen. Dies ermöglicht es, durch Einsetzen zweier längerer Schienen einerseits einen entsprechend langen kanalartigen und einfach zu reinigenden Hohlraum, durch den der Wurststrang nebst Förderbändern läuft, zu realisieren, andererseits können auch gleichzeitig zwei oder mehr entsprechende Kammern ausgekleidet werden. Sind beispielsweise vier Applikationskammern vorgesehen, so können vier Schienen verwendet werden, wobei sich jeweils ein Schienenpaar durch zwei Applikationskammern erstreckt.

Wie beschrieben umfasst die vorgesehene Fördereinrichtung bevorzugt zwei nebeneinander angeordnete Förderbänder, die an ihren einander zugewandten Seiten entsprechend profiliert sind, um den Wurststrang entsprechend sicher zwischen sich aufzunehmen und zu fördern. Die Förderbänder sind über entsprechende Rollen geführt und werden simultan angetrieben, so dass sie mit gleicher Geschwindigkeit umlaufen. Der Wurststrang befindet sich zwischen den beiden einander zugewandten Trümmern. Die beiden Bänder laufen durch die wenigstens eine oder, sofern vorgesehen, die mehreren Applikationskammern respektive durch den über die C-Schienen gebildeten jeweiligen Hohlraum. Die Förderbänder selbst sind bevorzugt aus Silikon, also einem hinreichend flexiblen Material, das auch ohne weiteres zur Ausbildung der entsprechenden Oberflächenprofilierung strukturiert werden kann. Alternativ kann jedes Förderband auch aus einem flexiblen Trägerband, z. B. aus PU, und einer darauf aufgebrachten Silikonbeschichtung bestehen.

Schließlich ist erfindungsgemäß eine Steuerungseinrichtung vorgesehen, die bei Erfassung eines Messwerts, der eine einen Referenzwert übersteigende Temperatur indiziert, die eine oder die mehreren Mikrowellenerzeugungseinrichtungen ausschaltet und zweckmäßigerweise natürlich auch die entsprechende Fördereinrichtung stoppt, also den Antrieb der Förderbänder stoppt. Die Steuerungseinrichtung wertet die ihr gegebenen Messwerte aus und vergleicht diese mit einem entsprechenden Referenzwert, um anhand dieses Vergleichs zu ermitteln, ob eine erhöhte Kammertemperatur gegeben ist, die ein Eingreifen erfordert oder nicht. Denkbar wäre es natürlich auch, dass die einzelnen Messeinrichtungen selbst diesen Vergleich vornehmen und der Steuerungseinrichtung das jeweilige Vergleichsergebnis liefern, die anhand dieses Vergleichsergebnisses dann gegebenenfalls steuernd eingreift.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Figur 1: eine Perspektivansicht einer erfindungsgemäßen Vorrichtung,

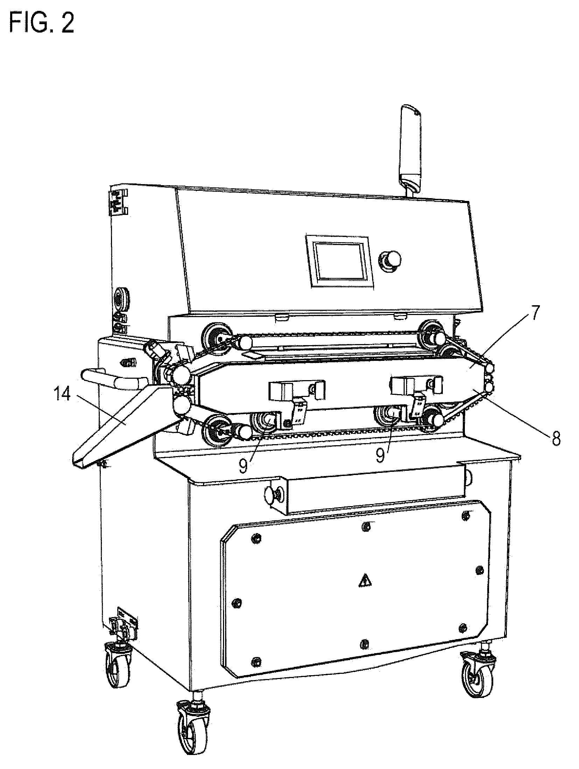

- Figur 2: die Vorrichtung aus Figur 1 ohne Sicherheitsrahmen,
- Figur 3: die Vorrichtung aus Figur 2 mit geöffnet gezeigtem Mikrowellenapplikator,
- Figur 4: die Vorrichtung aus Figur 3 mit der geöffneten Rückseite,
- Figur 5: eine Teilansicht der erfindungsgemäßen Vorrichtung mit Darstellung des Mikrowellenapplikators im geschlossenem Zustand,
- Figur 6: eine Teilansicht der erfindungsgemäßen Vorrichtung mit geöffnetem Mikrowellenapplikator zur Darstellung der Applikationskammern nebst Schienen, und
- Figur 7: eine Teilansicht der erfindungsgemäßen Vorrichtung, teilweise geschnitten, zur Darstellung der Anordnung zweier jeweils einer Applikationskammer zugeordneter Messeinrichtungen.

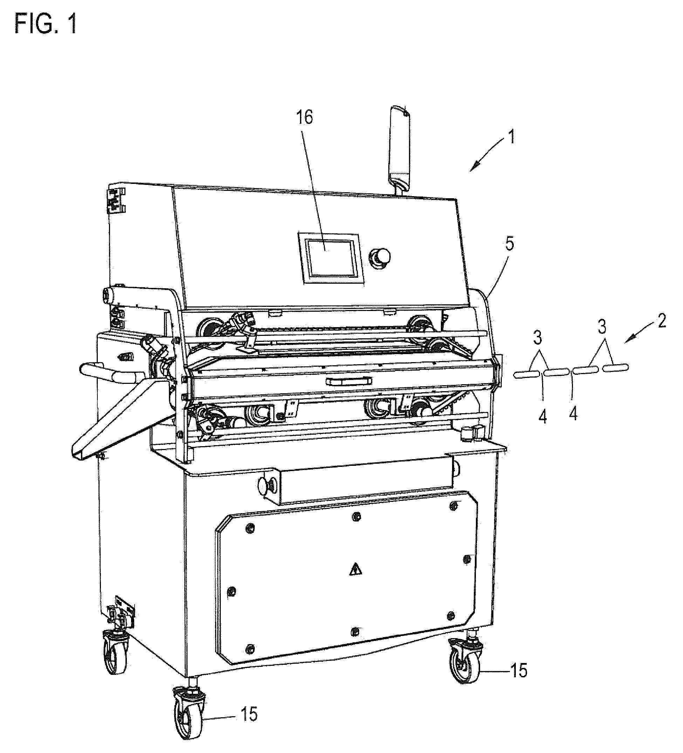

Figur 1 zeigt eine erfindungsgemäße Vorrichtung 1, die zum Behandeln eines Wurststrangs 2 bestehend aus mehreren hintereinander angeordneten Würsten 3 mit einer Wursthülle aus organischem Material, die im Bereich zwischen zwei Würsten 3 jeweils eine Abdrehung 4 aufweist, dient. Die Vorrichtung 1 appliziert im Betrieb Mikrowellenstrahlung, das heißt, dass der Wurststrang 2 mit hoher Geschwindigkeit (ca. 600 Würste pro Minute, im Bedarfsall auch mehr), durch die Vorrichtung 1 transportiert wird und dabei einer Mikrowellenstrahlung ausgesetzt wird. Diese Mikrowellenstrahlung dient dazu, die Wursthülle, also das organische Material, insbesondere im Bereich der Abdrehungen 4 zu denaturieren, also lokal zu verspröden, so dass allein durch diese Mikrowellenbehandlung die Würste 3 vereinzelt werden und einzeln aus der Vorrichtung 1 auslaufen.

Figur 1 zeigt die erfindungsgemäße Vorrichtung 1 in einer Komplettdarstellung, die folgenden Figuren zeigen jeweils reduzierte Ansichten respektive Teilansichten.

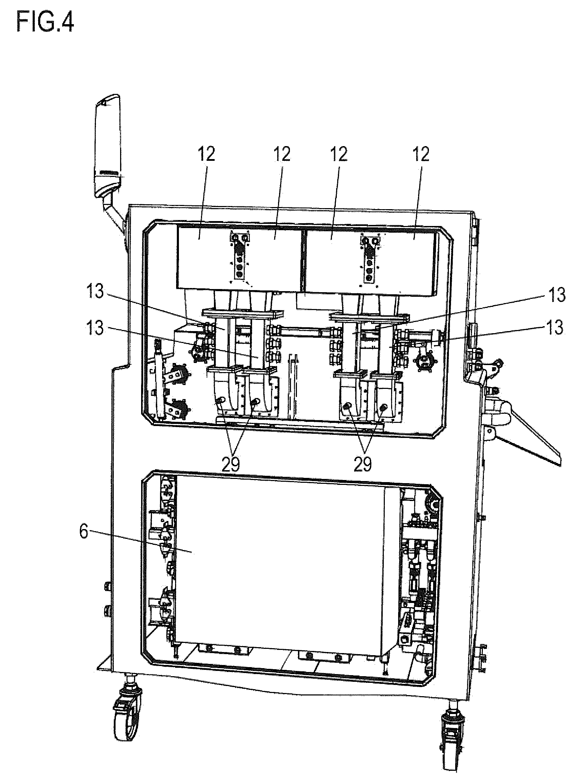

Aus Sicherheitsgründen ist ein Schwenkrahmen 5 vorgesehen, der für den Betrieb geschlossen sein muss, was über eine geeignete Sensorik erfasst wird. Nur bei geschlossenem Sicherheitsrahmen kann die Vorrichtung 1 überhaupt ihren Betrieb aufnehmen. Die Steuerung der Vorrichtung 1 erfolgt über eine nicht im Detail gezeigte Steuerungseinrichtung 6 (siehe Figur 4),die natürlich aus mehreren Steuerblöcken bestehen kann, denen unterschiedliche Steuerungsaufgaben zugeordnet sind.

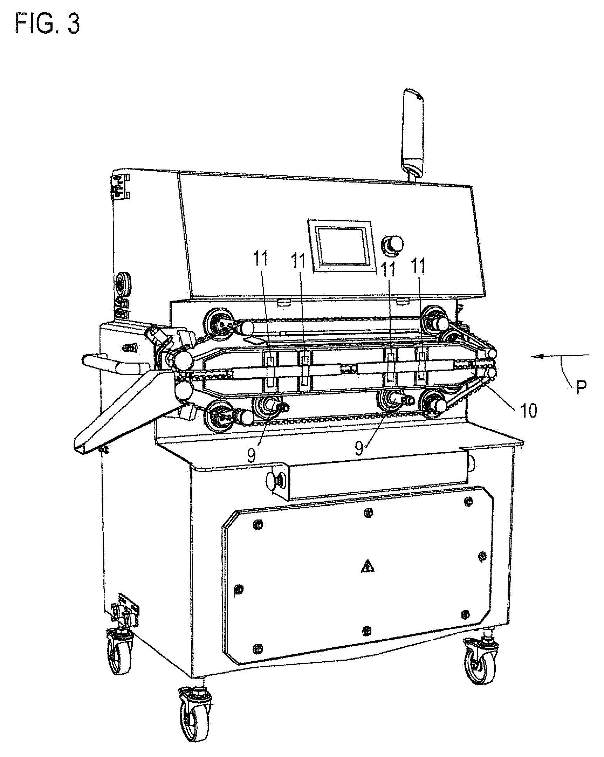

Die Vorrichtung 1 weist einen Mikrowellenapplikator 7 auf, der aus einem beweglichen Teil 8, das über Linearführungen 9 und einen geeigneten, nicht näher gezeigten Linearantrieb in einer Horizontalebene verschiebbar ist, sowie einem vorrichtungsseitig feststehenden zweiten Teil 10 (siehe Figur 3) besteht. Zum Betrieb müssen beide Teile zueinander gefahren sein, so dass der Mikrowellenapplikator geschlossen ist, was ebenfalls über eine geeignete Sensorik erfasst wird. Auch nur beigeschlossenem Mikrowellenapplikator 7 kann der Betrieb aufgenommen werden.

Der Mikrowellenapplikator 7 weist, siehe beispielsweise Figur 3, vier separate Applikationskammern 11 auf, die in Förderrichtung (Pfeil P in Figur 3) des Wurststrangs 2 hintereinander geschaltet sind. Das heißt, dass der Wurststrang 2 durch alle vier Applikationskammern 11 läuft, in denen er jeweils der Mikrowellenstrahlung ausgesetzt ist. Dabei weisen sowohl das Teil 8 als auch das Teil 10 entsprechende Kavitäten auf, die zusammen die jeweilige Applikationskammer bilden, wenn die Teile 8, 9 zusammengefahren sind. An beiden Teilen 8, 9 sind also jeweils Kammerabschnitte vorgesehen.

Jeder Applikationskammer 11 ist eine separate Mikrowellenerzeugungseinrichtung 12 zugeordnet, wobei - siehe Figur 4 -jeweils zwei Mikrowellenerzeugungseinrichtungen 12 in einem gemeinsamen Block angeordnet sind. Von jeder Mikrowellenerzeugungseinrichtung 12 läuft ein Hohlleiter 13 zu jeweils einer Applikationskammer 11. Durch diesen Hohlleiter 13 wird die Mikrowellenstrahlung von der jeweiligen Mikrowellenerzeugungseinrichtung, also einem hinreichend leistungsfähigen Magnetron, zur Applikationskammer geführt.

Der Wurststrang 2 selbst wird natürlich vor dem Durchlauf durch die erfindungsgemäße Vorrichtung 1 entsprechend hergestellt respektive aufbereitet. Hierzu wird über eine nicht näher gezeigte Füllvorrichtung das Wurstbrät in die Wursthülle, üblicherweise einen natürlichen Darm, gebracht, wonach über eine nicht näher gezeigte Abdrehvorrichtung die einzelnen Abdrehungen 4 durch Rotation der gefüllten Wursthülle erzeugt werden. Von der Abdrehvorrichtung gelangt der Wurststrang 2 über eine nicht gezeigte Fördereinrichtung zur Vorrichtung 1, wo er von einer nachfolgend noch beschriebenen Fördereinrichtung übernommen wird und durch den Mikrowellenapplikator 7 transportiert wird. Die vereinzelten Würste werden auf eine Schütte 14 gegeben, von welcher sie die Vorrichtung 1 zu einer nachgeschalteten Transporteinrichtung verlassen. Die Vorrichtung 1 ist als modulares Gerät ausgeführt, sie kann, da mit entsprechenden Rollen 15 versehen, ohne weiteres in eine entsprechende Fertigungslinie integriert werden. Die Bedienung der Vorrichtung 1 respektive die der Steuerungseinrichtung 6 erfolgt über einen Touchscreen 16, so dass der Anwender ohne weiteres in den Betrieb eingreifen kann.

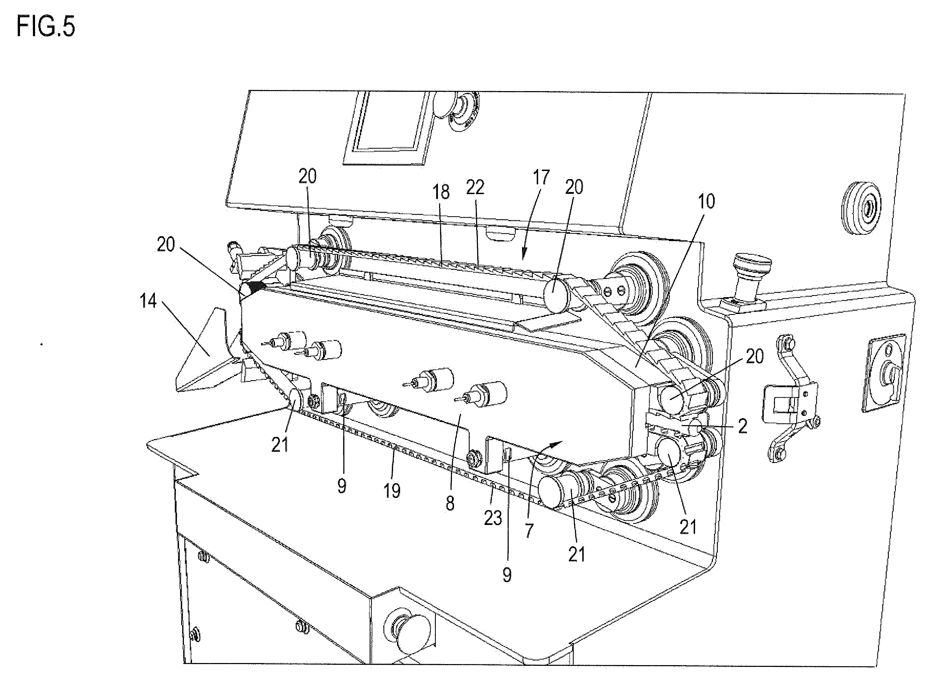

Der detaillierte Aufbau des Mikrowellenapplikators 7 sowie der zugeordneten Fördereinrichtung und die Anordnung der erfindungsgemäß vorgesehenen Messeinrichtungen zur Temperaturüberwachung der Temperatur im Inneren der Applikationskammern 11 ergibt sich aus den Figuren 5 - 7. Diese zeigen jeweils Detailansichten der Vorrichtung 1.

Figur 5 zeigt eine Detailansicht unter Darstellung des Mikrowellenapplikators 7. Dieser ist geschlossen, das heißt, das bewegliche Teil 8 ist in die Arbeitsposition anliegend am feststehenden Teil 10 gefahren.

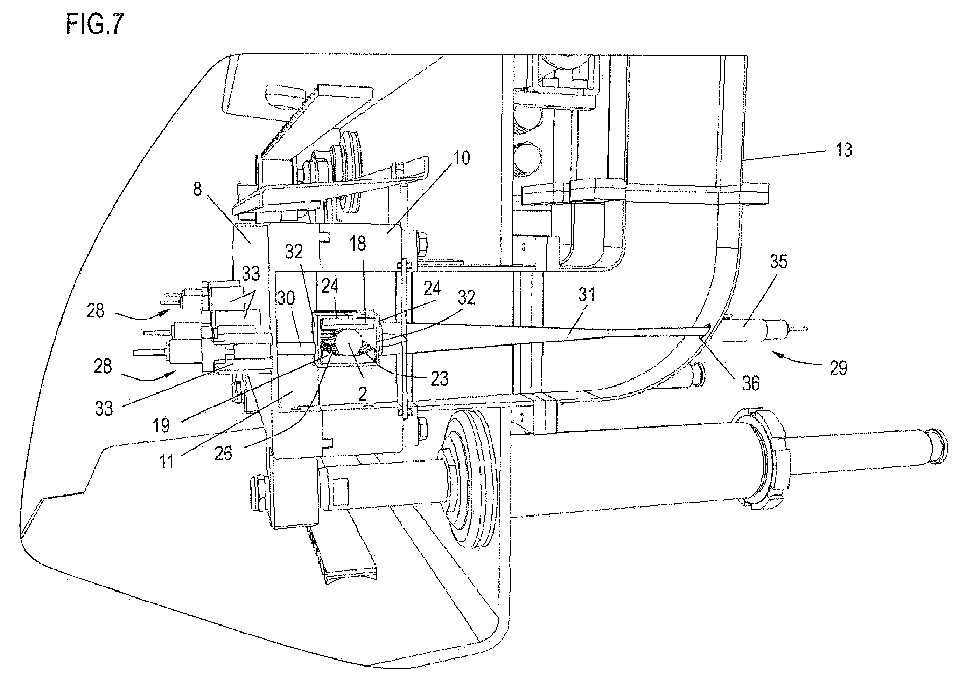

Figur 5 zeigt eine Fördereinrichtung 17, umfassend zwei übereinander angeordnete Förderbänder 18, 19, die jeweils über mehrere Rollen 20, 21 geführt sind, wobei wenigstens jeweils eine der Rollen 20, 21 angetrieben ist, so dass die Förderbänder 18, 19 umlaufen. Die Förderbänder 18, 19 laufen ersichtlich mit ihren beiden benachbart zueinander liegenden Trümmern durch den Mikrowellenapplikator 7 und nehmen den Wurststrang 2 zwischen sich auf. Um den Wurststrang 2 sicher zu führen ist jedes Förderband 18, 19 an der Seite, an der der Wurststrang anliegt, mit einer Profilierung 22, 23 versehen, wobei die Profilierung 22 des Förderbandes 18 quasi als Sägezahnprofil ausgeführt ist, während die Profilierung 23 des Förderbandes 19 als Rillenprofil mit einer gewölbten Querschnittsstruktur (siehe insbesondere Fig. 7) ausgeführt ist. Die Förderbänder 18, 19 bestehen bevorzugt aus Silikon, sind also hinreichend flexibel. Sie laufen durch den gesamten Mikrowellenapplikator 7 hindurch, das heißt, dass die Fördereinrichtung 17 an der Einlaufseite den noch zusammenhängenden Wurststrang 2 transportiert, während am auslaufseitigen Ende, zur Schütte 14 hin, die einzelnen Würste von der Fördereinrichtung 17 abgegeben werden.

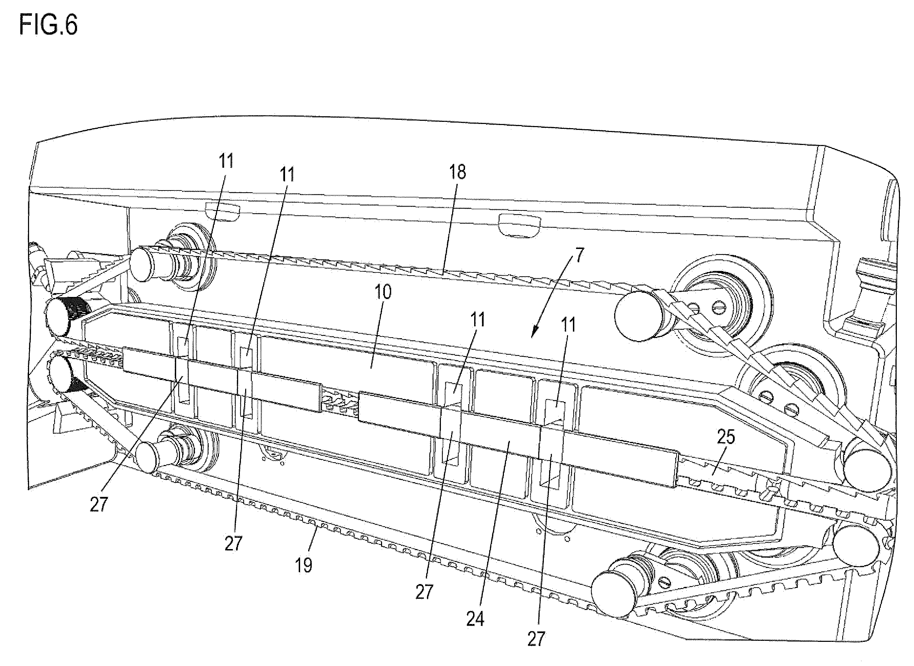

Figur 6 zeigt in einer vergrößerten Detailansicht den geöffneten Mikrowellenapplikator 7, der Übersichtlichkeit wegen ist das bewegliche Teil 8 nicht gezeigt.

Deutlich erkennbar sind die einzelnen Applikationskammern 11, im gezeigten Beispiel insgesamt vier einander nachgeschaltete Applikationskammern 11, durch die die beiden Förderbänder 18, 19 übereinanderliegend laufen.

Figur 6 zeigt des Weiteren insgesamt vier Schienen 24, wobei jeweils zwei Schienen 24, die jeweils (siehe Figur 7) einen C-förmigen Querschnitt aufweisen, einander zugewandt angeordnet sind. Die Schienen 24 sind in einen Transportkanal 25, der im gezeigten Ausführungsbeispiel im feststehenden Teil 10 des Mikrowellenapplikators 7 ausgebildet ist, und der die einzelnen Applikationskammern 11 miteinander verbindet, angeordnet. Die Schienen 24 bilden aufgrund ihrer entgegengesetzt zueinander gewählten Anordnung einen seitlich geschlossenen Hohlraum 26, durch den - siehe insbesondere Figur 7 - die Förderbänder 18 und damit auch der Wurststrang 2 läuft.

Wie insbesondere Figur 6 zeigt, durchlaufen die jeweiligen Schienenpaare 24 auch die einzelnen Applikationskammern 11, das heißt, dass die Schienen 24 die Applikationskammern 11 quasi auskleiden und einen auch in der jeweiligen Applikationskammer 11 gegebenen Hohlraum 26 definieren. In den Bereichen, in denen die Schienen 24 in der jeweiligen Applikationskammer 11 aufgenommen sind, hier die Bereiche 27, ist die Wandstärke des Schienenmaterials etwas reduziert, mithin also die Schienenwand des jeweiligen Schenkels etwas dünner, um eine Beeinträchtigung der zugeführten Mikrowellenstrahlung, die ja in den Hohlraum 26 gelangt, zu vermeiden, und um eine schnelle Durchwärmung des Schienenmaterials zu ermöglichen, was im Rahmen der Temperaturmessung eine Rolle spielt, worauf nachfolgend noch eingegangen wird.

Ersichtlich sind die beiden Schienenpaare 24 in Förderrichtung etwas voneinander beabstandet. Dies ist jedoch nicht zwingend. Denkbar wäre es auch, nur zwei, dann aber deutlich längere Schienen zu verwenden, die durch alle vier Applikationskammern 11 laufen.

Die Schienen 24 sind natürlich aus einem Material, dass die applizierte Mikrowellenstrahlung nicht oder komplett vernachlässigbar beeinträchtigt. Bevorzugt wird PTFE verwendet, da dieser Kunststoff einerseits die applizierte Strahlung nicht beeinträchtigt, andererseits auch nicht brennbar ist und ohne weiteres entnommen und gereinigt werden kann. Aber auch andere Materialien beispielsweise auf Keramikbasis oder dergleichen sind denkbar.

Die Schienen 24 können ohne weiteres entnommen werden. Hierzu sind lediglich die beiden vorne liegenden Schienen 24 aus dem Transportkanal 25 zu ziehen, wonach die Förderbänder 18, 19 von den Rollen genommen und die hinteren Schienen 24 entnommen werden können. Die Schienen können somit einzeln gereinigt werden, wie auch der Transportkanal 25 respektive die Applikationskammern 11, sofern erforderlich.

Figur 7 zeigt in einer Detailansicht die Integration zweier erfindungsgemäßer Messeinrichtungen 28, 29, die der Erfassung von Messwerten dienen, die ein Maß für die in der jeweiligen Applikationskammer 11 herrschende Temperatur darstellen. Jeder einzelnen Applikationskammer 11 sind zwei solcher Messeinrichtungen 28, 29 zugeordnet, wobei Figur 7, was die Messeinrichtung 29 angeht, nur eine zeigt.

Jede Messeinrichtung 28, 29 ist eine optische Messeinrichtung, im vorliegenden Fall bevorzugt eine Infrarotmesseinrichtung. Sie dienen dazu, die Temperatur quasi indirekt zu erfassen, indem die jeweilige Temperatur oder Temperaturverteilung, also lokal aufgelöst, von Abschnitten der beiden Schienen 24 erfasst werden. Wie Figur 7 zeigt, umfasst jede Messeinrichtung 28, 29 eine nicht näher gezeigte Messoptik, die einen sich z. B. kegelförmig erweiternden Messbereich 30, 31 definiert, innerhalb welchem die jeweilige Messeinrichtung 28, 29 mit ihrem Sensor die Außentemperatur der jeweiligen mittigen Schenkel 32 der beiden Schienen 24 erfassen. Die Außentemperatur korreliert natürlich mit der Temperatur im Inneren der Applikationskammer 11 respektive hier insbesondere des Hohlraums 26. Wenngleich hier also die Temperatur also nicht unmittelbar im Inneren gemessen wird, sondern an der Außenseite, so kann aufgrund der aufgenommenen Messwerte ohne weiteres die gegebene Innentemperatur ermittelt werden, da die entsprechenden Materialparameter des Schienenmaterials bekannt sind, insbesondere was die Wärme- oder Temperaturleitung angeht, so dass eine entsprechende Berechnung der Ist-Innentemperatur möglich ist. Da die Temperaturerfassung in den von der Wandstärke her dünnen Bereichen 27 jeder Schiene 24 erfolgt, ist eine schnelle Durchwärmung und damit genaue Temperaturermittlung möglich.

Die Messeinrichtungen 28, 29 nehmen also großflächig die Außentemperatur der Schienen 24 respektive der Schenkel 32 auf. Diese Außentemperatur ist im Betrieb konstant. Es kann jedoch, wenn sich in der Applikationskammer 11 respektive hier im Hohlraum 26, soweit er in der Applikationskammer 11 positioniert ist, beispielsweise am Wurststrang 2 außenseitig anhaftendes Wurstbrät ablagert, zu einer Temperaturerhöhung kommen. Denn das an den Schienen 24 haftende Wurstbrät ist, da es in diesem Fall ja nicht mehr aus der Applikationskammer 11 respektive diesen Bereich bewegt wird, kontinuierlich der Mikrowellenstrahlung ausgesetzt. Es erwärmt sich also übermäßig, bis hin zu einem Verbrennen. Diese zunehmende Temperatur führt zwangsläufig auch zu einer Temperaturerhöhung der Schiene, insbesondere im dünnen Bereich 27 der Schenkel 32, wo das Wurstbrät anhaften kann, nachdem die jeweiligen oberhalb und unterhalb der Förderbänder 18, 19 liegenden Schenkel ja durch die benachbarten Förderbänder 18, 19 abgedeckt sind. Da die Messeinrichtungen 28, 29 die Schenkelaußenseiten großflächig erfassen, kann folglich auch sehr genau eine mitunter auch nur lokale Temperaturerhöhung erfasst werden.

Die aufgenommenen Messwerte werden entweder in den Messeinrichtungen 28, 29 selbst oder in der Steuerungseinrichtung 6 entsprechend verarbeitet und mit einem entsprechenden Vergleichswert oder Referenzwert verglichen, der eine etwaige Temperaturtoleranz definiert. Sind die Messwerte kleiner als der Vergleichs- oder Referenzwert, so ist keine relevante Temperaturerhöhung gegeben, der Betrieb kann weiterlaufen. Sind jedoch größere Messwerte ermittelt worden, so wird die Steuerungseinrichtung 6 umgehend den weiteren Betrieb insbesondere der Mikrowellenerzeugungseinrichtungen 12 und der Fördereinrichtung 17 stoppen, um eine weitere Aufheizung zu vermeiden, die im Extremfall zu einer Rauchentwicklung oder einem Entzünden der anhaftenden Verschmutzung führen kann, und um die Reinigung zu ermöglichen. In einem solchen Fall wird selbstverständlich auch eine entsprechende Alarmierungsanzeige, sei sie optisch oder akustisch, ausgegeben, um den Bediener zu informieren.

Wie Figur 7 zeigt, sind die Messeinrichtungen 28 und 29 in unterschiedlicher Weise verbaut. Die Messeinrichtungen 28 befinden sich allesamt am beweglichen Teil 8 des Mikrowellenapplikators 7. An dem Teil 8 sind entsprechende Befestigungsaufnahmen 33 vorgesehen, in die die Messeinrichtungen 28 entsprechend eingesetzt bzw. eingeschraubt werden. Die jeweilige Messoptik erfasst die entsprechende Außenseite des Schenkels 32. Wird folglich das Teil 8 geöffnet, so werden die Messeinrichtungen 28 dementsprechend mitgenommen.

Die Messeinrichtungen 29 sind, siehe Figur 7, an einer entfernten Position an geeigneten Befestigungsaufnahmen 35 an den Hohlleitern 13 angeordnet, siehe hierzu auch Figur 4. Durch eine entsprechende Bohrung 36 im jeweiligen Hohlleiter 13 erstreckt sich der Messbereich 31, der zur jeweiligen Schiene 24 respektive auf den Schenkel 32 gerichtet ist. Der Hohlleiter 13 ist zwangsläufig hohl, er mündet unmittelbar in der Applikationskammer 11, so dass der Messbereich 31 ohne weiteres aufgespannt werden kann.

Aufgrund dieser Anordnung befindet sich einerseits jede Messeinrichtung 28, 29 außerhalb des Strahlungsbereichs, andererseits ist trotzdem eine großflächige Erfassung der Außenseite des Schenkels 32 zur Temperaturermittlung möglich. Selbstverständlich kommunizieren die Messeinrichtungen 28, 29 mit der Steuerungseinrichtung 6, so dass diese in Abhängigkeit der erfassten Messwerte den Vorrichtungsbetrieb entsprechend steuern kann.

Wenngleich das Ausführungsbeispiel berührungslose optische Messeinrichtungen 28, 29 auf Basis von Infrarotmesseinrichtungen beschreibt, ist es denkbar, auch berührende Messeinrichtungen, jedoch wiederum auf optischer Basis zu verwenden. In diesem Fall wären die Außenseiten der beiden Schenkel 32 mit den Enden entsprechender Glasfasern oder Glasfaserbündel oder Ähnlichem zu verbinden, um quasi einen "optischen Zugriff" zu ermöglichen. Bevorzugt jedoch kommen die beschriebenen berührungslos arbeitenden Messeinrichtungen zum Einsatz.

Das gezeigte Ausführungsbeispiel beschreibt vier Applikationskammern 11, denen jeweils ein Messeinrichtungspaar 28, 29 zugeordnet ist. Grundsätzlich ist es jedoch denkbar, auch nur eine Applikationskammer oder nur zwei Applikationskammern mit entsprechenden zugeordneten Messeinrichtungen 28, 29 vorzusehen. Die konkrete Anzahl an vorgesehenen Applikationskammern 11 richtet sich letztlich danach, wie leistungsfähig die jeweiligen Mikrowellenerzeugungseinrichtungen 12, also die Magnetrons sind. Erforderlich ist stets, dass in einer Applikationskammer 11 respektive der Kammerkaskade so viel Mikrowellenenergie appliziert wird, dass die Abdrehungen 4 soweit verspröden, dass sie aufbrechen.

Des Weiteren ist es denkbar, beispielsweise zwei Applikationskammern über eine gemeinsame Mikrowellenerzeugungseinrichtung zu speisen, mithin also im gezeigten Ausführungsbeispiel nur zwei Mikrowellenerzeugungseinrichtungen 12 vorzusehen.

Weiterhin ist es denkbar, dass jede Mikrowellenerzeugungseinrichtung 12 separat gesteuert wird, um quasi einen Energiegradienten über die Förderlänge einzustellen. So ist es denkbar, die in Förderrichtung erste Mikrowellenerzeugungseinrichtung mit hoher Leistung zu betreiben, um im Einlaufbereich bereits eine hohe Energiedichte zu applizieren und die nachgeschalteten Mikrowellenerzeugungseinrichtungen 12 jeweils mit etwas geringerer Leistung zu betreiben, so dass folglich die Leistung stufenweise zur letzten Mikrowellenerzeugungseinrichtung 12 abnimmt.

Schließlich ist die Querschnittsgeometrie der Schienen 24 nicht auf einen C-förmigen Querschnitt beschränkt. Der rechteckige Querschnitt ist insofern vorteilhaft, als ebene und von den Messeinrichtungen 28, 29 großflächig erfassbare Flächen an den Schenkeln 32 gegeben sind. Grundsätzlich wäre es aber auch denkbar, dort gerundete Fläche vorzusehen, so dass folglich auch ein dem Grunde nach U-förmiger Querschnitt denkbar wäre. Auch in diesem Fall besteht die Möglichkeit, die beiden Schienen aneinanderstoßend anzuordnen und einen entsprechenden Hohlraum auszubilden. Alternativ wäre es denkbar, nur eine Schiene C-förmig auszuführen, dann aber mit längeren Seitenschenkeln, während die andere Schiene als Platte ausgeführt ist, die entsprechend angesetzt wird.

Insgesamt bietet die erfindungsgemäße Vorrichtung mit ihrer wenigstens einen, vorzugsweise den beiden integrierten Messeinrichtungen die Möglichkeit, eine Temperaturüberwachung im Inneren der Applikationskammer zu realisieren und in Abhängigkeit der gegebenen Temperatur den Betrieb zu steuern. Hierüber können sehr schnell und zielsicher etwaige Verunreinigungen, die zu beseitigen sind, erfasst werden, selbst ein Brandschutz ist hierüber realisierbar.

## Patentansprüche

1. Vorrichtung zum Behandeln eines Wurststrangs (2) bestehend aus mehreren hintereinander angeordneten Würsten (3) mit einer Wursthülle aus einem organischen Material, die jeweils im Bereich zwischen zwei Würsten eine Abdrehung (4) aufweist, wobei wenigstens ein Mikrowellenapplikator (7) mit wenigstens einer Applikationskammer (11) vorgesehen ist, dem wenigstens eine Mikrowellenerzeugungseinrichtung (12) zum Erzeugen von der Applikationskammer (11) zuzuführender Mikrowellenstrahlung zugeordnet ist, sowie wenigstens einer Fördereinrichtung (17) zum Fördern des Wurststrangs (2) durch die wenigstens ein Applikationskammer (11), **dadurch gekennzeichnet, dass** wenigstens eine Messeinrichtung (28, 29) zum Erfassen wenigstens eines Messwertes, der ein Maß für die in der Applikationskammer (11) herrschende Temperatur darstellt, vorgesehen ist.

2. Vorrichtung nach Anspruch 1, **dadurch gekennzeichnet, dass** die Messeinrichtung (28, 29) den Messwert als Temperaturmesswert direkt im Inneren der Applikationskammer erfasst.

3. Vorrichtung nach Anspruch 1, **dadurch gekennzeichnet, dass** die Messeinrichtung (28, 29) den Messwert als Temperaturmesswert eines die Applikationskammer (11) auskleidenden oder begrenzenden Bauteils (24) erfasst.

4. Vorrichtung nach Anspruch 3, **dadurch gekennzeichnet, dass** zwei an unterschiedlichen Positionen angeordnete Messeinrichtungen (28, 29) vorgesehen sind, die jeweils einen Temperaturmesswert des oder jeweils eines Bauteils (24) erfassen.

5. Vorrichtung nach Anspruch 3 oder 4, **dadurch gekennzeichnet, dass** die Messeinrichtung (28, 29) den Temperaturmesswert an der Außenseite des Bauteils (24) erfasst.

6. Vorrichtung nach einem der vorangehenden Ansprüche, **dadurch gekennzeichnet, dass** die Messeinrichtung (28, 29) eine berührungslos arbeitende optische Messeinrichtung, insbesondere eine Infrarotmesseinrichtung ist, oder dass die Messeinrichtung eine berührend am Bauteil anliegende Messeinrichtung, insbesondere umfassend am Bauteil anliegende Glasfasern, ist.

7. Vorrichtung nach einem der Ansprüche 3 bis 6, **dadurch gekennzeichnet, dass** das oder jedes Bauteil eine aus einem für Mikrowellenstrahlung transparenten Material bestehende und lösbar im Mikrowellenapplikator (7) angeordnete Schiene (24) ist, zu der benachbart der Wurststrang (2) in der Applikationskammer (11) läuft, dient.

8. Vorrichtung nach Anspruch 7, **dadurch gekennzeichnet, dass** zwei Schienen (24) vorgesehen sind, die einen C-förmigen Querschnitt aufweisen und einander zugewandt in dem Mikrowellenapplikator (7) angeordnet sind, derart, dass sie zumindest in der Applikationskammer (11) einen rohrförmigen Hohlraum (26), durch den der Wurststrang (2) läuft, bilden.

9. Vorrichtung nach Anspruch 7 oder 8, **dadurch gekennzeichnet, dass** die oder wenigstens eine der beiden Schienen (24) zumindest abschnittsweise in dem Bereich (27), der in der Applikationskammer (11) angeordnet ist, eine geringere Wandstärke als in anderen Bereichen aufweisen.

10. Vorrichtung nach Anspruch 8 oder 9, **dadurch gekennzeichnet, dass** der Mikrowellenapplikator (7) aus zwei zum Öffnen auseinanderbewegbaren Teilen (8, 10) besteht, wobei der eine Teil (10) positionsfest ist und mit einem zur Mikrowellenerzeugungeinrichtung (12) führenden Hohlleiter (13) verbunden ist, während der andere Teil (8) bewegbar gelagert ist, und wobei die Messeinrichtung (28), die die Temperatur an der Außenseite der Schiene (24) misst, am bewegbaren Teil (8) angeordnet ist und mit einer Messoptik auf die Schiene (24) gerichtet ist, oder durch das Teil (8) zur Schiene (24) geführt ist.

11. Vorrichtung nach einem der Ansprüche 8 bis 10, **dadurch gekennzeichnet, dass** der Mikrowellenapplikator (7) aus zwei zum Öffnen auseinanderbewegbaren Teilen (8, 10) besteht, wobei der eine Teil (10) positionsfest ist und mit einem zur Mikrowellenerzeugungeinrichtung (12) führenden Hohlleiter (13) verbunden ist, während der andere Teil (8) bewegbar gelagert ist, und dass die, gegebenenfalls zweite, Messeinrichtung (29) außerhalb des Hohlleiters (13) angeordnet und entweder mit einer Messoptik durch den Hohlleiter (13) auf die Schiene (24) gerichtet ist, oder durch den Hohlleiter (13) zur Schiene (24) geführt ist.

12. Vorrichtung nach einem der Ansprüche 7 bis 11, **dadurch gekennzeichnet, dass** die oder jede Schiene (24) aus Polytetraflourethylen, Glimmer, Quarzglas, Aluminiumoxid, Zirkoniumoxid, oder Keramik aus Basis von Aluminiumoxid oder Zirkoniumoxid ist.

13. Vorrichtung nach einem der vorangehenden Ansprüche, **dadurch gekennzeichnet, dass** im Mikrowellenapplikator (7) mehrere hintereinander angeordnete Applikationskammern (11) vorgesehen sind, denen Mikrowellenstrahlung von einer gemeinsamen Mikrowellenerzeugungseinrichtung (12) oder von jeweils separaten Mikrowellenerzeugungseinrichtungen (12) zugeführt wird, wobei zumindest einem Teil, vorzugsweise jeder Applikationskammer (11) wenigstens eine Messeinrichtung (28, 29) zugeordnet ist.

14. Vorrichtung nach einem der Ansprüche 7 bis 12 und 13, **dadurch gekennzeichnet, dass** die oder beide Schienen (24) durch mehrere Applikationskammern (11) laufen.

15. Vorrichtung nach einem der vorangehenden Ansprüche, **dadurch gekennzeichnet, dass** die Fördereinrichtung (17) umfassend zwei übereinander angeordnete Förderbänder (18, 19), die den Wurststrang (2) zwischen sich aufnehmen, durch die eine Applikationskammer (11) oder die mehreren Applikationskammern (11), insbesondere den Hohlraum (26) läuft.

16. Vorrichtung nach Anspruch 15, **dadurch gekennzeichnet, dass** die Förderbänder (18, 19) aus Silikon sind oder eine Silikonbeschichtung aufweisen.

17. Vorrichtung nach einem der vorangehenden Ansprüche, **dadurch gekennzeichnet, dass** eine Steuerungseinrichtung (6) vorgesehen ist, die bei Erfassung eines Messwerts, der eine einen Referenzwert übersteigende Temperatur indiziert, die eine oder die mehreren Mikrowellenerzeugungseinrichtungen (12) ausschaltet.

## Claims

1. Device for treating a string of sausages (2) composed of a plurality of sausages (3) which are disposed so as to be behind one another, having a sausage casing from an organic material which in the region between two sausages displays in each case a twist (4), wherein at least one microwave applicator (7) which has at least one application chamber (11) and is assigned at least one microwave generation unit (12) for generating the microwave radiation to be supplied to the application chamber (11), and which has at least one conveying unit (17) for conveying the string of sausages (2) through the at least one application chamber (11) is provided, **characterized in that** at least one measuring unit (28, 29) for identifying at least one measured value which represents a measure of the temperature prevailing in the application chamber (11) is provided.

2. Device according to Claim 1, **characterized in that** the measuring unit (28, 29) identifies the measured value as a measured value of temperature directly in the interior of the application chamber.

3. Device according to Claim 1, **characterized in that** the measuring unit (28, 29) identifies the measured value as a measured value of temperature of a component (24) which lines or delimits the application chamber (11).

4. Device according to Claim 3, **characterized in that** two measuring units (28, 29) which are disposed at different positions and which identify in each case a measured value of temperature of the or of in each case one component (24) are provided.

5. Device according to Claim 3 or 4, **characterized in that** the measuring unit (28, 29) identifies the measured value of temperature on the outer side of the component (24).

6. Device according to one of the preceding claims, **characterized in that** the measuring unit (28, 29) is an optical measuring unit which operates in a non-contacting manner, in particular an infrared measuring unit, or that the measuring unit is a measuring unit which bears on the component in a contacting manner, in particular glass fibers which bear on the component in a comprehensive manner.

7. Device according to one of Claims 3 to 6, **characterized in that** the or each component is a rail (24) which is composed of a material which is transparent to microwave radiation and is releasably disposed in the microwave applicator (7), and adjacent to which the string of sausages (2) runs in the application chamber (11) serves.

8. Device according to Claim 7, **characterized in that** two rails (24) which display a C-shaped cross section and are disposed so as to face one another in the microwave applicator (7) in such a manner that, at least in the application chamber (11), they form a tubular hollow space (26) through which the string of sausages (2) runs are provided.

9. Device according to Claim 7 or 8, **characterized in that** the or at least one of the two rails (24), at least in portions, in the region (27) which is disposed in the application chamber (11), display/displays a lesser wall thickness than in other regions.

10. Device according to Claim 8 or 9, **characterized in that** the microwave applicator (7) is composed of two parts (8, 10), which are movable apart for opening, wherein the one part (10) is positionally fixed and is connected to a hollow conductor (13) which leads to the microwave generation unit (12), while the other part (8) is movably mounted, and wherein the measuring unit (28) which measures the temperature on the outer side of the rail (24) is disposed on the movable part (8) and, by way of an optical measuring system, is directed toward the rail (24) or is guided through the part (8) to the rail (24).

11. Device according to one of Claims 8 to 10, **characterized in that** the microwave applicator (7) is composed of two parts (8, 10), which are movable apart for opening, wherein the one part (10) is positionally fixed and is connected to a hollow conductor (13) which leads to the microwave generation unit (12), while the other part (8) is movably mounted, and that the optional second measuring unit (29) is disposed outside the hollow conductor (13) and is either, by way of an optical measuring system, directed through the hollow conductor (13) toward the rail (24) or is guided through the hollow conductor (13) to the rail (24).

12. Device according to one of Claims 7 to 11, **characterized in that** the or each rail (24) is from polytetrafluoroethylene, schist, fused quartz, aluminum oxide, zirconium oxide, or ceramic based on aluminum oxide or zirconium oxide.

13. Device according to one of the preceding claims, **characterized in that** a plurality of application chambers (11) which are disposed so as to be behind one another and which are supplied microwave radiation from a common microwave generation unit (12) or in each case separate microwave generation units (12) are provided, wherein at least one part, preferably each application chamber (11), is assigned at least one measuring unit (28, 29).

14. Device according to one of Claims 7 to 12 and 13, **characterized in that** the rail or both rails (24) run through a plurality of application chambers (11).

15. Device according to one of the preceding claims, **characterized in that** the conveying unit (17), which comprises two conveyor belts (18, 19) which are disposed so as to be on top of one another and which receive the string of sausages (2) between them, runs through the one application chamber (11) or the plurality of application chambers (11), in particular the hollow space (26).

16. Device according to Claim 15, **characterized in that** the conveyor belts (18, 19) are from silicone or display a silicone coating.

17. Device according to one of the preceding claims, **characterized in that** a controller (6) which upon identification of a measured value which indicates a temperature which exceeds a reference value switches off the one microwave generation unit (12) or the plurality of microwave generation units (12) is provided.

## Revendications

1. Dispositif de traitement d'un chapelet de saucisses (2) composé de plusieurs saucisses (3) disposées les unes derrière les autres avec un boyau à saucisse en matière organique comportant respectivement dans la région située entre deux saucisses une fermeture par rotation (4), au moins un applicateur de micro-ondes (7) avec au moins une chambre d'application (11) étant prévu, au moins un dispositif de production de micro-ondes (12) servant à produire le rayonnement de micro-ondes amené de la chambre d'application (11) étant associé à ladite chambre, ainsi qu'avec au moins un dispositif de transport (17) pour transporter le chapelet de saucisses (2) à travers l'au moins une chambre d'application (11), **caractérisé en ce qu'**au moins un dispositif de mesure (28, 29) est prévu pour déterminer au moins une valeur de mesure représentant une mesure de la température régnant dans la chambre d'application (11).

2. Dispositif selon la revendication 1, **caractérisé en ce que** le dispositif de mesure (28, 29) détermine la valeur de mesure prenant la forme de la valeur de mesure de température directement à l'intérieur de la chambre d'application.

3. Dispositif selon la revendication 1, **caractérisé en ce que** le dispositif de mesure (28, 29) détermine la valeur de mesure prenant la forme de la valeur de mesure de température d'un composant (24) revêtant ou délimitant la chambre d'application (11).

4. Dispositif selon la revendication 3, **caractérisé en ce que** deux dispositifs de mesure (28, 29) disposés à des endroits différents sont prévus, ces dispositifs déterminant respectivement une valeur de mesure de température du ou respectivement d'un composant (24).

5. Dispositif selon la revendication 3 ou 4, **caractérisé en ce que** le dispositif de mesure (28, 29) détermine la valeur de mesure de température au niveau du côté extérieur du composant (24).

6. Dispositif selon l'une quelconque des revendications précédentes, **caractérisé en ce que** le dispositif de mesure (28, 29) est un dispositif de mesure optique fonctionnant sans contact, notamment un dispositif de mesure par infrarouge ou que le dispositif de mesure est un dispositif de mesure reposant avec contact sur le composant, celui-ci comprenant notamment des fibres de verre reposant sur le composant.

7. Dispositif selon l'une quelconque des revendications 3 à 6, **caractérisé en ce que** le ou les composants sont composés d'un rail (24) réalisé en matière transparente au rayonnement de micro-ondes et disposé de façon amovible dans l'applicateur de micro-ondes (7), le chapelet de saucisses (2) avançant à proximité dudit rail dans la chambre d'application (11) servant.

8. Dispositif selon la revendication 7, **caractérisé en ce que** deux rails (24) sont prévus présentant une section transversale en forme de C et disposés de façon à être orientés face-à-face dans l'applicateur de micro-ondes (7), de telle sorte qu'ils forment, au moins dans la chambre d'application (11), un espace creux (26) en forme de tube à travers lequel le chapelet de saucisses (2) avance.

9. Dispositif selon la revendication 7 ou 8, **caractérisé en ce que** le rail ou un rail au moins parmi les deux rails (24) comporte au moins en partie dans la région (27) disposée dans la chambre d'application (11) une épaisseur de paroi plus réduite que dans d'autres régions.

10. Dispositif selon la revendication 8 ou 9, **caractérisé en ce que** l'applicateur de micro-ondes (7) se compose de deux parties mobiles l'une par rapport à l'autre (8, 10) pour l'ouverture, la première partie (10) étant fixe sur place et reliée à un conducteur creux (13) conduisant au dispositif de production de micro-ondes (12) tandis que l'autre partie (8) est disposée de façon mobile et que le dispositif de mesure (28) mesurant la température au niveau du côté extérieur du rail (24) est disposé au niveau de la partie mobile (8) et est orienté avec un système optique de mesure sur le rail (24) ou est amené à travers la partie (8) jusqu'au rail (24).

11. Dispositif selon l'une quelconque des revendications 8 à 10, **caractérisé en ce que** l'applicateur de micro-ondes (7) se compose de deux parties mobiles (8, 10) l'une par rapport à l'autre pour l'ouverture, la première partie (10) étant fixe sur place et étant reliée à un conducteur creux (13) conduisant au dispositif de production de micro-ondes (12) tandis que l'autre partie (8) est disposée de façon mobile et que l'éventuel deuxième dispositif de mesure (29) est disposé à l'extérieur du conducteur creux (13) et est soit orienté à travers le conducteur creux (13) sur le rail (24) avec un système optique de mesure soit guidé à travers le conducteur creux (13) jusqu'au rail (24).

12. Dispositif selon l'une quelconque des revendications 7 à 11, **caractérisé en ce que** le ou les rails (24) sont en polytétrafluoréthylène, en mica, en verre quartzeux, en oxyde d'aluminium, en oxyde de zirconium ou en céramique à base d'oxyde d'aluminium ou d'oxyde de zirconium.

13. Dispositif selon l'une quelconque des revendications précédentes, **caractérisé en ce que** plusieurs chambres d'application (11) disposées les unes derrière les autres sont prévues dans l'applicateur de micro-ondes (7), leur rayonnement de micro-ondes étant amené par un dispositif de production de micro-ondes (12) commun ou par des dispositifs de production de micro-ondes (12) respectivement séparés, au moins un dispositif de mesure (28, 29) étant associé à au moins une partie, de préférence à chaque chambre d'application (11).

14. Dispositif selon l'une quelconque des revendications 7 à 12 et 13, **caractérisé en ce que** le ou les rails (24) passent à travers plusieurs chambres d'application (11).

15. Dispositif selon l'une quelconque des revendications précédentes, **caractérisé en ce que** le dispositif de transport (17) comprenant deux tapis de transport (18, 19) disposés l'un au-dessus de l'autre et logeant entre eux le chapelet de saucisses (2) passe à travers la chambre d'application (11) ou les multiples chambres d'application (11), notamment l'espace creux (26).

16. Dispositif selon la revendication 15, **caractérisé en ce que** les tapis de transport (18, 19) sont en silicone ou comportent un revêtement en silicone.

17. Dispositif selon l'une quelconque des revendications précédentes, **caractérisé en ce qu'**un dispositif de commande (6) est prévu, celui-ci déconnectant le ou les dispositifs de production de micro-ondes (12) en cas de détermination d'une valeur de mesure induisant une température dépassant une valeur de référence.
